# EUROPÄISCHE PATENTSCHRIFT

(11) **EP 4 155 584 B1**
(45) Veröffentlichungstag und Bekanntmachung des Hinweises auf die Patenterteilung: **07.05.2025**
(21) Anmeldenummer: 22195158.5
(22) Anmeldetag: 12.09.2022
(51) Int. Cl.: F16H 61/04, F16H 3/089, B60K 1/00

(54) **VERFAHREN ZUM BETREIBEN EINER ANTRIEBSANORDNUNG, ANTRIEBSANORDNUNG UND FAHRZEUG**
METHOD FOR OPERATING A DRIVE ASSEMBLY, DRIVE ASSEMBLY AND VEHICLE
PROCÉDÉ DE FONCTIONNEMENT D'UN SYSTÈME D'ENTRAÎNEMENT, SYSTÈME D'ENTRAÎNEMENT ET VÉHICULE

(30) Priorität: 28.09.2021 DE 102021210796
(43) Veröffentlichungstag der Anmeldung: 29.03.2023
(73) Patentinhaber: Robert Bosch GmbH, 70442 Stuttgart (DE)
(72) Erfinder: Shigematsu, Takashi, Yokohama 245-0005 (JP); Klimenko, Michael, 70839 Gerlingen (DE); Liu, Zhengyu, 70191 Stuttgart (DE); Mizobe, Takuya, 71638 Ludwigsburg (DE)

(56) Entgegenhaltungen:
- DE-A1- 10 060 688
- DE-A1- 102009 054 459
- DE-B4- 19 915 200
- US-A- 5 715 901

## Beschreibung

### Stand der Technik

Die Erfindung betrifft ein Verfahren zum Betreiben einer Antriebsanordnung, insbesondere für ein Fahrzeug, nach dem Oberbegriff des Anspruchs 1, eine Antriebsanordnung, insbesondere für ein Fahrzeug, mit Merkmalen des Anspruchs 8, sowie ein Fahrzeug mit Merkmalen des Anspruchs 9.

Bei Antriebsanordnungen mit einer elektrischen Maschine ist es in der Regel vorgesehen, dass diese mit einem Abtriebselement, bspw. einer Abtriebswelle, gekoppelt und von diesem wieder abgekoppelt werden kann. Für einen solchen Kupplungsvorgang ist es notwendig, die Drehzahlen der elektrischen Maschine und des Abtriebselements aufeinander abzustimmen. In der Regel steht die abgekoppelte elektrische Maschine still und dreht sich nicht. Zum Kuppelvorgang muss die elektrische Maschine entsprechend auf eine bestimmte Drehzahl beschleunigt werden. Während des Kupplungsvorgangs kommt es zu einer Zahn-auf-Zahn Stellung zwischen den kuppelnden Elementen, bei der die Zähne der jeweiligen Verzahnungen aufeinanderprallen, bevor es zu einem Eingriff der Verzahnungen kommt.

Eine derartige Zahn-auf-Zahn Stellung führt bei einem Koppelvorgang zu höherem Verschleiß und Leistungsverlusten und ist daher unerwünscht.

DE 10 2013 204 227 A1 offenbart einen Antriebsstrang und ein Verfahren zum Durchführen eines Lastwechsels mit einem formschlüssigen Schaltelement, wobei Zahn-auf-Zahn Stellungen vermieden werden sollen. Der Antriebsstrang weist eine elektrische Maschine, eine Antriebswelle, zwei Übersetzungsstufen, eine Zwischenwelle, ein Abtriebsdifferential, ein formschlüssiges Schaltelement und ein reibschlüssiges Schaltelement auf. Bei einem Schaltvorgang von einer Schaltstufe in die andere Schaltstufe wird das formschlüssige Schaltelement von der einen Schaltstufe (bspw. Schaltstellung A) in eine Neutralstellung bewegt und das reibschlüssige Schaltelement wird durch Schließen mit der anderen Schaltstufe gekoppelt. Im geschlossenen Zustand des reibschlüssigen Schaltelements kann das formschlüssige Schaltelement mit der anderen Schaltstufe gekoppelt werden (bspw. Schaltstellung B). Zum Auflösen einer Zahn-auf-Zahn-Stellung kann das reibschlüssige Schaltelement bei Bedarf geringfügig geöffnet werden, um ein Einspuren zu ermöglichen.

Nachteilig dabei ist, dass ein derartiger Antriebsstrang einen komplexen Aufbau mit vielen Komponenten, wie bspw. zwei unterschiedliche Schaltelemente, aufweist, was die Störungs- und Fehleranfälligkeit der Antriebsanordnung erhöht. Insbesondere der Einsatz eines reibschlüssigen Schaltelements führt dabei zu einem hohen Verschleiß.

Aus der DE 199 15 200 B4 ist ein Verfahren zum Schalten eines Getriebes bekannt, wobei das Getriebe als CVT-Getriebe ausgebildet ist und eine Antriebswelle und eine als Klauenkupplung ausgebildete Kupplungseinrichtung mit formschlüssig in Eingriff bringbaren Schaltelementen umfasst, wobei ein erstes Schaltelement drehfest mit der Antriebswelle gekoppelt ist, wobei die Antriebswelle in einem Kupplungsvorgang drehfest mit einem zweiten Schaltelement gekoppelt und in einem Abkupplungsvorgang von diesem abgekoppelt werden kann, wobei bei einem Kupplungsvorgang das erste Schaltelement mit dem zweiten Schaltelement formschlüssig in Eingriff gebracht wird. Aus dieser Schrift ist weiterhin bekannt, einen Rotationssensor zu verwenden, der ein Impulssignal ausgibt, wenn ein Zahn einer Verzahnung an dem Rotationssensor vorbeigeführt wird. Eine relative Winkellage wird aus Absolutbeträgen der Winkellagen der Schaltelemente unter Zuhilfenahme einer Zählung der Zahnpimpulse bestimmt, ausgehend von einem Zustand, bei dem die Klaue eines ersten Schaltelementes einer Lücke des korresponidierenden zweiten Schaltelementes gegenüberliegt.

Die US 5 715 901 A offenbart eine Antriebsanordnung für ein Fahrzeug, umfassend eine elektrische Maschine mit einer Rotorwelle, eine Antriebswelle, wobei die Antriebswelle mit der Rotorwelle der elektrischen Maschine derart gekoppelt ist, dass die Antriebswelle mittels der elektrischen Maschine angetrieben werden kann, ein Koppelelement und ein auf einer Ausgangswelle angeodnetes Getriebezahnrad, wobei das Getriebezahnrad mit dem Koppelelement derart gekoppelt ist, dass das Getriebezahnrad mittels des Koppelelementes angetrieben werden kann, und eine Kupplungseinrichtung mit einem Kupplungselement, wobei das Kupplungselement drehfest mit der Antriebswelle gekoppelt ist, wobei die Antriebswelle in einem Kupplungsvorgang drehfest mit dem Koppelelement gekoppelt und in einem Abkupplungsvorgang von diesem abgekoppelt werden kann und wobei beim Kupplungsvorgang eine Verzahnung des Kupplungselementes und eine Verzahnung des Koppelelementes formschlüssig miteinander in Eingriff gebracht werden.

Aus der DE 10 2009 054 459 A1 ist eine Erfassungseinrichtung zum Erfassen einer beim Einspuren notwendigen Differenzposition zwischen zwei korrespondierenden Klauen zweier Kupplungselemente bekannt, um eine Zahn-auf-Zahnstellung auszuschließen. Als Erfassungseinrichtung sind zwei Hall-Sensoren vorgesehen, wobei jeder Hall-Sensor den Klauen eines der beiden Kupplungselemente zugeordnet ist. Die Signale der Hall-Sensoren werden in einer Auswerteeinheit aufsummiert, wobei der jeweilige Wchselstromanteil der Signale ein Maß für die Überdeckung der korrespondierenden Klauen ist.

Die DE 100 60 688 A1 offenbart ein Verfahren zum Einrücken einer formschlüssigen Kupplung, bei dem zu Verhinderung einer Zahn-auf-Zahn Stellung von Kupplungshälften die relativen Drehwinkelstellungen der Kupplungshälfen erkennt werden. Dabei können den beteiligen Wellen Drehwinkelsensoren zugeordnet sein, die bei Berücksichtigung der zwischengeschalteten Getriebestufen in den Drehwinkel der Kupplungshälften umgerechnet werden können.

### Offenbarung der Erfindung

Erfindungsgemäß wird ein Verfahren zum Betreiben einer Antriebsanordnung, insbesondere für ein Fahrzeug, vorgeschlagen. Dabei umfasst die Antriebsanordnung eine elektrische Maschine mit einer Rotorwelle und eine Antriebswelle. Die Antriebswelle kann als Zwischenwelle ausgebildet sein. Die Antriebswelle ist mit der Rotorwelle der elektrischen Maschine derart gekoppelt, dass die Antriebswelle mittels der elektrischen Maschine (drehend) angetrieben werden kann.

Die Antriebswelle ist insbesondere drehfest oder mittels einer Verzahnung (bspw. einer Stirnradstufe) mit einem Antrieb, insbesondere einer elektrischen Maschine (Elektromotor), gekoppelt.

Die Antriebsanordnung umfasst weiter ein Koppelelement. Dies kann bspw. eine mit einer Abtriebswelle, einer Zwischenwelle oder einem auf der Antriebswelle angeordnetem Losrad gekoppelte Verzahnung bzw. Zahnrad/Ritzel sein.

Die Antriebsanordnung umfasst weiter ein auf einer Ausgangswelle angeordnetes Getriebezahnrad. Das Getriebezahnrad ist mit dem Koppelelement derart gekoppelt, dass das Getriebezahnrad mittels des Koppelelements (drehend) angetrieben werden kann. Die Ausgangswelle kann in Form eines Differentials mit zwei Abtriebswellen ausgebildet sein.

Die Antriebsanordnung umfasst weiter eine Kupplungseinrichtung (Kupplung) mit einem Kupplungselement (z. B. eine bewegliche bzw. axial verschiebliche Schaltmuffe) wobei das Kupplungselement drehfest mit der Antriebswelle gekoppelt ist. Das Kupplungselement ist insbesondere mittels eines auf der Antriebswelle angeordneten Zahnrads bzw. einer auf der Antriebswelle angeordneten Führungsnabe mit einer Verzahnung drehfest mit der Antriebswelle gekoppelt. Das Kupplungselement ist insbesondere axial (also entlang der Längsrichtung der Antriebswelle, bzw. parallel zur Mittellängsachse der Antriebswelle) verschiebbar.

Die Antriebswelle kann in einem Kupplungsvorgang drehfest mit dem Koppelelement gekoppelt und in einem Abkupplungsvorgang von diesem abgekoppelt werden. Beim Kupplungsvorgang werden eine Verzahnung (insbesondere eine Innenverzahnung) des Kupplungselements und eine Verzahnung (insbesondere Außenverzahnung) des Koppelelements formschlüssig miteinander in Eingriff gebracht. Das Kupplungselement wird hierzu insbesondere axial verlagert. Insbesondere läuft das Kupplungselement dabei mit seiner Innenverzahnung auf einer korrespondierenden Außenverzahnung der Führungsnabe bzw. des Zahnrades. Das Koppelelement kann sich insbesondere im abgekoppelten Zustand relativ zur Antriebswelle frei drehen.

Die Antriebsanordnung weist weiter einen Rotationssensor auf. Der Rotationssensor gibt ein Impulssignal aus, wenn ein Zahn einer Verzahnung des Getriebezahnrads oder ein Zahn eines drehfest mit der Ausgangswelle gekoppelten Geberrads an dem Rotationssensor vorbeigeführt wird (durch Drehung des Getriebezahnrads oder des Geberrads).

Die Absolutstellung des Getriebezahnrads wird erfindungsgemäß aus einer Absolutstellung der Rotorwelle der elektrischen Maschine, einem Übersetzungsverhältnis zwischen dem Kupplungselement und der Rotorwelle und einem Übersetzungsverhältnis zwischen dem Koppelelement und dem Getriebezahnrad in einem gekoppelten Zustand der Kupplungseinrichtung (also wenn das Koppelelement, das Kupplungselement und die Antriebswelle drehfest gekoppelt sind) neu bestimmt. Die elektrische Maschine kann hierzu einen Sensor zur Bestimmung der Absolutstellung der elektrischen Maschine bzw. des Rotors (Rotorwelle) der elektrischen Maschine umfassen. Mit dem Übersetzungsverhältnis ist das Verhältnis zwischen der Anzahl und/oder Größe der Zähne zweier Verzahnungen gemeint. Dieser Vorgang kann als Wiederherstellung der Absolutposition des Getriebezahnrads bezeichnet werden.

Der Rotationssensor dient insbesondere zur Detektion einer Relativstellung des Getriebezahnrads oder Geberrads.

Vorliegend ist mit Detektion ein Erfassen der am Rotationssensor vorbeirotierenden Zähne der Verzahnung des Getriebezahnrads oder der Zähne des Geberrads gemeint.

Mit einer Relativstellung des Getriebezahnrads oder Geberrads ist vorliegend eine Stellung der Zähne der Verzahnung des Getriebezahnrads oder Geberrads insbesondere in Bezug auf den Rotationssensor gemeint. Mit anderen Worten, es kann festgestellt werden, ob unter dem Rotationssensor (bzw. in dessen Detektionsbereich) sich ein Zahn des Getriebezahnrads oder des Geberrads befindet oder nicht.

Der Rotationssensor kann als Raddrehzahlsensor ausgebildet sein. Insbesondere kann aus der Relativstellung des Geberrads mittels einer Umrechnung die Relativstellung des Getriebezahnrads ermittelt werden und umgekehrt.

Dabei wird eine Absolutstellung des Getriebezahnrads oder des Geberrads in Abhängigkeit einer vorher abgespeicherten Absolutstellung des Getriebezahnrads oder Geberrads und einem Zählen der mittels des Rotationssensors ausgegebenen Impulssignale bestimmt.

Mit einer Absolutstellung des Getriebezahnrads oder Geberrads ist vorliegend eine Stellung eines bestimmten Zahns der Verzahnung des Getriebezahnrads oder Geberrads insbesondere in Bezug auf den Rotationssensor gemeint. Mit anderen Worten, es kann festgestellt werden, in welcher Drehstellung sich ein bestimmter Zahn der Verzahnung des Getriebezahnrads oder des Geberrads befindet.

Es ist denkbar, dass aus der Absolutstellung des Geberrads mittels Umrechnung die Absolutstellung des Getriebezahnrads ermittelt werden kann und umgekehrt.

Der Rotationssensor kann bspw. als Hallsensor ausgebildet sein, es sind aber auch andere Drehzahlsensoren denkbar.

Die vorgeschlagene Ausgestaltung hat u.a. den Vorteil, dass mittels des Impulssignals des Rotationssensors die Drehzahl der elektrischen Maschine bei einem Kupplungsvorgang derart synchronisiert werden kann, dass eine Zahn-auf-Zahn Stellung vermieden oder eine Zeitspanne, in der es zu einer Zahn-auf-Zahn Stellung kommt (Zahn-auf-Zahn Zeit), reduziert werden kann. Damit kann Verschleiß reduziert und Leistungsverluste, die mit der Zahn-auf-Zahn Stellung zusammenhängen minimiert werden.

Mit einer Zahn-auf-Zahn Stellung ist eine Stellung zweier Verzahnungen gemeint, bei der sich die Zähne beider Verzahnungen, insbesondere mit ihren Radialflächen, in Kontakt miteineinander befinden und so einen Eingriff der beiden Verzahnungen verhindern. Mit der Reduzierung der Zahn-auf-Zahn Zeit kann die Kupplungszeit des gesamten Kupplungsvorgangs reduziert werden.

Gemäß einer Weiterbildung kann die Absolutstellung des Getriebezahnrads oder des Geberrads nach mindestens einem Rotationszyklus (insbesondere nach mehreren Rotationszyklen, insbesondere nach jedem Rotationszyklus) abgespeichert werden. Dabei kann der Rotationszyklus einer Umdrehung des Getriebezahnrads oder des Geberrads entsprechen. Dabei kann die bereits abgespeicherte Absolutstellung jeweils mit einer neuen Absolutstellung überschrieben werden. Ebenso ist das Abspeichern mehrerer, insbesondere hintereinander ermittelter, Absolutstellungen denkbar.

Gemäß einer Weiterbildung kann eine Relativstellung des Kupplungselements (also in welcher Position sich die Zähne der Verzahnung des Kupplungselements relativ zur Rotorwelle der elektrischen Maschine befinden) aus der Absolutstellung der Rotorwelle der elektrischen Maschine bestimmt werden. Hierzu kann insbesondere das Übersetzungsverhältnis zwischen der Rotorwelle und dem Kupplungselement eingesetzt werden.

Gemäß einer Weiterbildung kann eine Relativstellung des Koppelelements (also in welcher Position sich die Zähne der Verzahnung des Koppelelements relativ zu der Verzahnung des Getriebezahnrads befinden) aus der Absolutstellung des Getriebezahnrads bestimmt werden. Hierzu kann insbesondere das Übersetzungsverhältnis zwischen dem Getriebezahnrad und dem Koppelelement benutzt werden.

Gemäß einer Weiterbildung kann der Kupplungsvorgang in Abhängigkeit der Relativstellung des Koppelelements und/oder der Relativstellung des Kupplungselements durchgeführt werden. Hierdurch kann die Zahn-auf-Zahn Stellung zwischen den Verzahnungen des Koppelelements und Kupplungselements vermieden oder zumindest die entsprechende Zahn-auf-Zahn Zeit verkürzt werden.

Gemäß einer Weiterbildung kann die Relativstellung des Kupplungselements vor einem Kupplungsvorgang mittels eines Bestromen der elektrischen Maschine und/oder Erhöhen einer Drehzahl der Rotorwelle (Beschleunigen der Rotorwelle) eingestellt werden. Dies kann insbesondere bei einem Stillstand eines Fahrzeugs mit der Antriebsanordnung, also wenn das Getriebezahnrad sich nicht dreht, erfolgen.

Gemäß einer Weiterbildung kann die Relativstellung des Kupplungselements in Abhängigkeit der Relativstellung des Koppelelements eingestellt werden. Die Relativstellung des Koppelelements ändert sich nicht beim Stillstand des Fahrzeugs mit der Antriebsanordnung, also wenn das Getriebezahnrad sich nicht dreht. Die Relativstellung des Kupplungselements kann so eingestellt bzw. an die Relativstellung des Kopplelelements angepasst werden, dass ein Kupplungsvorgang bei einem sich nicht drehenden Getriebezahnrad (z. B. bei Stillstand des Fahrzeugs mit der Antriebsanordnung) ohne eine Zahn-auf-Zahn Stellung bzw. ohne eine Zahn-auf-Zahn Zeit durchgeführt werden kann.

Erfindungsgemäß wird eine Antriebsanordnung, insbesondere für ein Fahrzeug, vorgeschlagen, wobei die Antriebsanordnung eingerichtet ist, um nach einem Verfahren gemäß obiger Ausführungen betrieben zu werden. Hinsichtlich der damit erzielbaren Vorteile wird auf die diesbezüglichen Ausführungen zum Verfahren verwiesen. Zur weiteren Ausgestaltung der Antriebsanordnung können die im Zusammenhang mit dem Verfahren beschriebenen Maßnahmen dienen.

Die Antriebsanordnung kann bspw. als elektrische Achse (E-Achse) ausgebildet sein oder Bestandteil einer E-Achse bilden.

Erfindungsgemäß wird ein Fahrzeug, insbesondere ein Kraftfahrzeug, mit einer Antriebsanordnung gemäß obiger Ausführungen vorgeschlagen. Hinsichtlich der damit erzielbaren Vorteile wird auf die diesbezüglichen Ausführungen zur Antriebsanordnung verwiesen. Zur weiteren Ausgestaltung des Fahrzeugs können die im Zusammenhang mit der Antriebsanordnung bzw. dem Verfahren beschriebenen und/oder die nachfolgend noch erläuterten Maßnahmen dienen.

Nachfolgend wird eine Ausführungsform der Erfindung unter Bezugnahme auf die beiliegenden Zeichnungen erläutert. Es zeigen:
- Figur 1: eine schematische Schnittdarstellung einer Antriebsanordnung;
- Figur 2: einen Ausschnitt der schematischen Schnittdarstellung aus Figur 1;
- Figur 3: einen Ausschnitt einer schematischen Darstellung von Verzahnungen eines Koppelelements, eines Kupplungselements und einer Führungsnabe vor einem Kupplungsvorgang;
- Figur 4: eine schematische Darstellung der Verzahnungen gemäß Figur 3 während des Kupplungsvorgangs;
- Figur 5: eine schematische Darstellung der Verzahnungen gemäß Figur 3 nach dem Kupplungsvorgang; und
- Figur 6: eine schematische Darstellung eines mittels eines Rotationssensors ausgegebenen Impulssignals im Vergleich zu einer Zahnstellung eines Getriebezahnrads und eines Koppelelements.

Vorliegend wird das Verfahren beispielhaft anhand der in den Figuren gezeigten Antriebsanordnung 10 erläutert. Das Verfahren ist nicht auf die gezeigte Antriebsanordnung 10 beschränkt, sondern kann auch an anderen Antriebsanordnungen mit einer Kupplung durchgeführt werden.

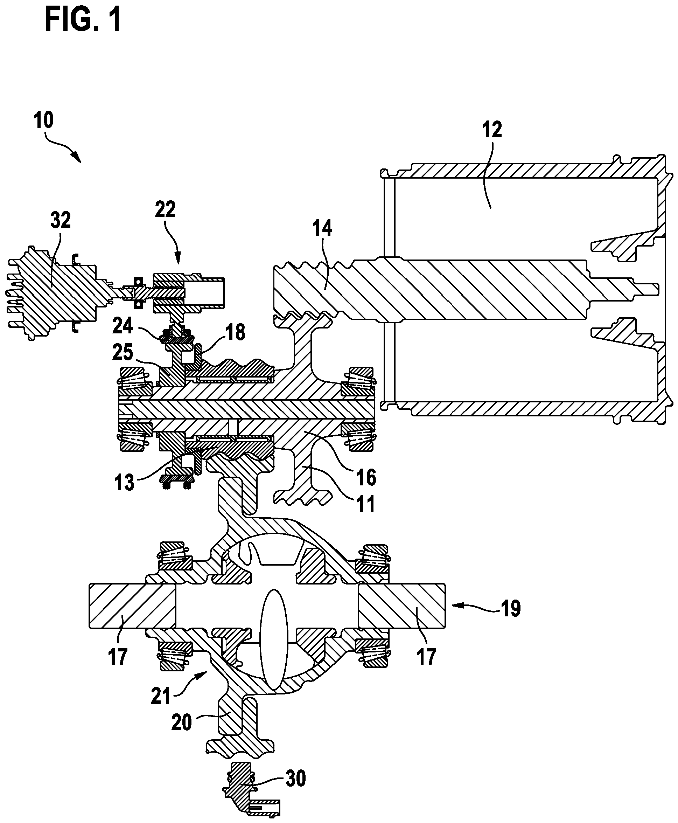

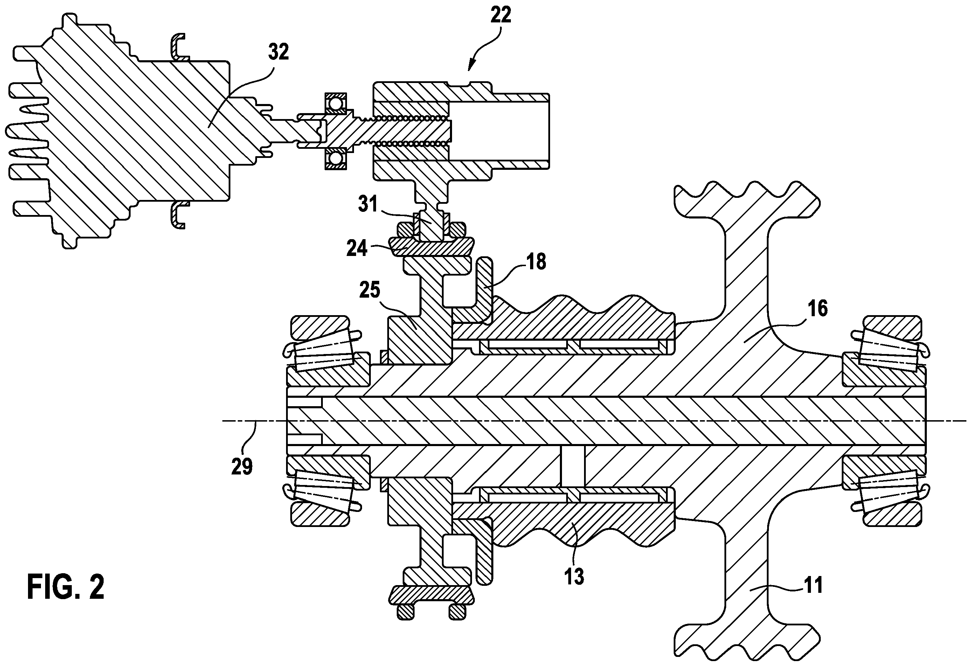

Figur 1 zeigt eine schematische Schnittdarstellung der Antriebsanordnung 10 und Figur 2 zeigt einen Ausschnitt der schematischen Schnittdarstellung gemäß Figur 1.

Die Antriebsanordnung 10 weist eine Antriebswelle 16 auf. Auf der Antriebswelle 16 ist ein Zahnrad 11 drehfest angeordnet. Die Antriebswelle 16 ist mittels des Zahnrads 11 mit einer Rotorwelle 14 einer elektrischen Maschine 12 gekoppelt, so dass die elektrische Maschine 12 die Antriebswelle 16 antreiben kann.

Vorliegend ist die Antriebswelle 16 als Zwischenwelle ausgebildet. Auf der Antriebswelle 16 ist ein Losrad 13 angeordnet, das mit einem Getriebezahnrad 20 einer Ausgangswelle 19 kämmt. Auf dem Losrad 13 ist ein Koppelelement 18 drehfest angeordnet. Auf der Ausgangswelle 19 kann ein Geberrad angeordnet sein (nicht dargestellt).

Vorliegend ist die Ausgangswelle 19 in Form eines Differentials 21 und zweier mit dem Differential 21 gekoppelten Abtriebswellen 17 ausgebildet (lediglich schematisch dargestellt).

Die Antriebsanordnung 10 weist eine Kupplungseinrichtung 22 mit einem Kupplungselement 24 auf. Das Kupplungselement 24 weist eine Verzahnung 26 (Innenverzahnung) und das Koppelelement 18 eine Verzahnung 28 (Außenverzahnung) auf (vgl. Fig.1 bis 3).

Auf der Antriebswelle 16 ist eine Führungsnabe 25 mit einer Verzahnung 27 (Außenverzahnung) drehfest angeordnet (vgl. Fig.1 bis 3). Das Kupplungselement 24 ist drehfest auf der Führungsnabe 25 angeordnet, wobei die (Innen-)Verzahnung 26 des Kupplungselements 24 und die (Außen-)Verzahnung 27 der Führungsnabe 25 miteinander in Eingriff sind.

Das Kupplungselement 24 ist axial verschiebbar ausgebildet. Mit anderen Worten kann das Kupplungselement 24 parallel zur Mittellängsachse 29 der Antriebswelle 16 bewegt werden. Hierzu weist die Kupplungseinrichtung 22 im Beispiel eine Schaltgabel 31 auf, die mittels eines elektrischen Antriebs 32 axial, also parallel zur Mittellängsachse 29 der Antriebswelle 16, abgetrieben bzw. bewegt werden kann.

Die in den Figuren 1 und 2 gezeigte Antriebsanordnung 10 befindet sich in einem Zustand vor einem Kupplungsvorgang (Koppelelement 18 und Kupplungselement 24 (noch) nicht miteinander gekoppelt).

Die Antriebsanordnung weist weiter einen Rotationssensor 30 auf (vgl. Figur 1).

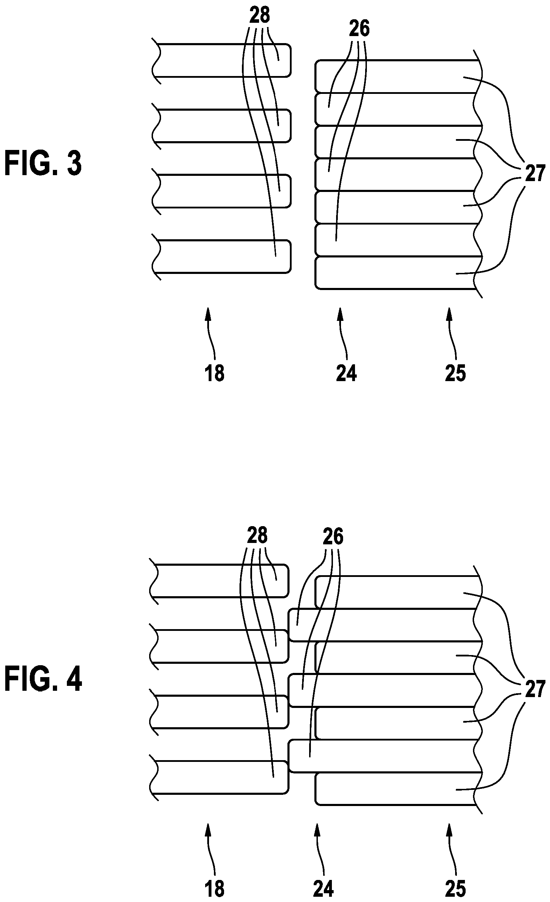

Figur 3 zeigt eine einen Ausschnitt einer schematischen Darstellung der Verzahnung 28 des Koppelelements 18, der Verzahnung 26 des Kupplungselements 24 und der Verzahnung 27 der Führungsnabe 25 vor dem Kupplungsvorgang.

Vor dem Kupplungsvorgang ist die Verzahnung 26 des Kupplungselements 24 beabstandet von der Verzahnung 28 des Koppelelements 18 angeordnet.

Figur 4 zeigt eine schematische Darstellung der Verzahnungen 26, 27, 28 gemäß Figur 3 während des Kupplungsvorgangs. Während des Kupplungsvorgangs schiebt im Beispiel die Schaltgabel 31 (vgl. Fig. 1 und 2) das Kupplungselement 24 in Richtung des Koppelelements 18 (in Figur 4 nach links).

Abhängig von der Relativstellung des Kupplungselements 24 und des Koppelelements 18 gelangen die Verzahnungen 28, 26 des Kupplungselements 24 und des Koppelelements 18 direkt in Eingriff oder es kommt, wie in Fig. 4 dargestellt, zunächst zu einer Zahn-auf Zahn-Stellung der Verzahnungen 26, 28. Die in Fig. 4 dargestellte Zahn-auf-Zahn-Stellung verhindert solange den Eingriff, bis die Zahn-auf-Zahn-Stellung überwunden und die beiden Verzahnungen 28.26 in Eingriff gelangen können.

Die Zahn-auf-Zahn-Zeit kann reduziert oder verhindert werden, indem der Kupplungsvorgang in Abhängigkeit der Relativstellung der Verzahnung 26 des Kupplungselements 24 und/oder der Verzahnung 28 des Koppelelements 18 durchgeführt wird. Dabei kann die Relativstellung der Verzahnung 26 des Kupplungselements 24 mittels der elektrischen Maschine 12 gezielt eingestellt werden.

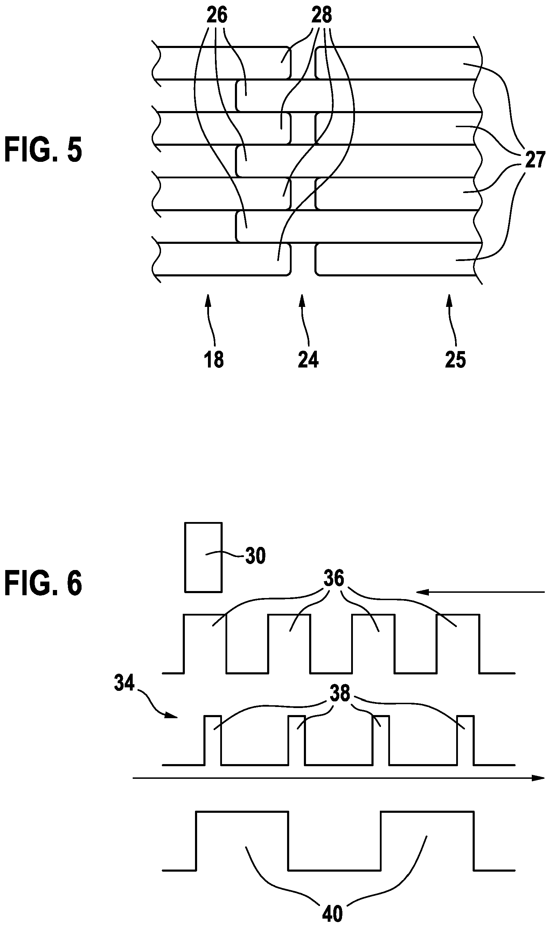

Figur 5 zeigt eine schematische Darstellung der Verzahnungen 26, 27, 28 gemäß Figur 3 nach dem Kupplungsvorgang. Die Verzahnung 28 des Koppelelements 18 und die Verzahnung 26 des Kupplungselements 24 sind nun miteinander in Eingriff. Damit sind das Koppelelement 18 und das Kupplungselement 24 drehfest miteinander gekoppelt.

Figur 6 zeigt beispielhaft eine schematische Darstellung eines mittels des Rotationssensors 30 ausgegebenen Impulssignals 34 im Vergleich zu einer Zahnstellung eines Getriebezahnrads 20 und eines Koppelelements 18.

Sobald ein Zahn 36 der Verzahnung des Getriebezahnrads 20 unter dem Rotationssensor 30 vorbeigeführt wird (in Figur 6 mittels eines Pfeils nach links angedeutet) erzeugt der Rotationssensor einen Impuls 38. Eine Vielzahl von Impulsen 38 in einer Abhängigkeit von der Zeit (in Figur 6 mittels eines Pfeils nach rechts angedeutet) ergibt ein Impulssignal 34. Dabei entsprechen die Impulse 38 den Zähnen 36 der Verzahnung des Getriebezahnrads 20.

Damit kann aus dem dargestellten Impulssignal 34 die Relativstellung des Getriebezahnrads 20 ermittelt werden.

Das Getriebezahnrad 20 ist über das Losrad 13 mit dem Koppelelement 18 gekoppelt. Entsprechend hängt die Stellung der Zähne 40 der Verzahnung 28 des Koppelelements 18 von der Stellung der Zähne 36 der Verzahnung des Getriebezahnrads 20 ab.

Damit hängt die Relativstellung des Koppelelements 18 von der Relativstellung des Getriebezahnrads 20 ab. So kann mittels eines Übersetzungverhältnisses zwischen dem Getriebezahnrad 20 und dem Koppelelement 18 und der Relativstellung des Getriebezahnrads 20, welche aus dem Impulssignal 34 bestimmt werden kann, die Relativstellung des Koppelelements 18 bestimmt werden.

Vorliegend bestimmen die unterschiedliche Anzahl und Größe der Zähne 36 der Verzahnung des Getriebezahnrads 20 im Vergleich zu den Zähnen 40 der Verzahnung 28 des Koppelelements 18 das Übersetzungsverhältnis. Die unterschiedliche Anzahl und Größe der Zähne 36 und 40 sind in Figur 6 mittels unterschiedlich großer Rechtecke und deren unterschiedlichen Anzahl angedeutet.

Entsprechend kann aus dem Impulssignal 34 mittels des Übersetzungsverhältnisses zwischen dem Getriebezahnrad 20 und dem Koppelelement 18 die Relativstellung des Koppelelements 18 und somit die Stellung dessen Zähne 40 bestimmt werden.

## Patentansprüche

1. Verfahren zum Betreiben einer Antriebsanordnung (10), insbesondere für ein Fahrzeug, umfassend
- eine elektrische Maschine (12) mit einer Rotorwelle (14),
- eine Antriebswelle (16), wobei die Antriebswelle (16) mit der Rotorwelle (14) der elektrischen Maschine (12) derart gekoppelt ist, dass die Antriebswelle (16) mittels der elektrischen Maschine (12) angetrieben werden kann,
- ein Koppelelement (18),
- ein auf einer Ausgangswelle (19) angeordnetes Getriebezahnrad (20), wobei das Getriebezahnrad (20) mit dem Koppelelement (18) derart gekoppelt ist, dass das Getriebezahnrad (20) mittels des Koppelelements (18) angetrieben werden kann,
- eine Kupplungseinrichtung (22) mit einem Kupplungselement (24), wobei das Kupplungselement (24) drehfest mit der Antriebswelle (16) gekoppelt ist,
- wobei die Antriebswelle (16) in einem Kupplungsvorgang drehfest mit dem Koppelelement (18) gekoppelt und in einem Abkupplungsvorgang von diesem abgekoppelt werden kann,
- wobei beim Kupplungsvorgang eine Verzahnung (26) des Kupplungselements (24) und eine Verzahnung (28) des Koppelelements (18) formschlüssig miteinander in Eingriff gebracht werden,
- einen Rotationssensor (30), wobei der Rotationssensor (30) ein Impulssignal (34) ausgibt, wenn ein Zahn (36) einer Verzahnung des Getriebezahnrads (20) oder ein Zahn eines drehfest mit der Ausgangswelle (19) gekoppelten Geberrads an dem Rotationssensor (30) vorbeigeführt wird,
- wobei eine Absolutstellung des Getriebezahnrads (20) in Abhängigkeit einer vorher abgespeicherten Absolutstellung des Getriebezahnrads (20) und einem Zählen der mittels des Rotationssensors (30) ausgegebenen Impulssignale bestimmt wird, wobei die Absolutstellung des Getriebezahnrads (20) aus einer Absolutstellung der Rotorwelle (14) der elektrischen Maschine (12), einem Übersetzungsverhältnis zwischen dem Kupplungselement (24) und der Rotorwelle (14) und einem Übersetzungsverhältnis zwischen dem Koppelelement (18) und dem Getriebezahnrad (20) in einem gekoppelten Zustand der Kupplungseinrichtung (22) neu bestimmt wird.

2. Verfahren nach Anspruch 1, **dadurch gekennzeichnet, dass** die Absolutstellung des Getriebezahnrads (20) oder des Geberrads nach mindestens einem Rotationszyklus abgespeichert wird, wobei der Rotationszyklus einer Umdrehung des Getriebezahnrads oder des Geberrads entspricht.

3. Verfahren nach Anspruch 1, **dadurch gekennzeichnet, dass** eine Relativstellung des Kupplungselements (24) aus der Absolutstellung der Rotorwelle (14) der elektrischen Maschine (12), insbesondere über das Übersetzungsverhältnis zwischen der Rotorwelle (14) und dem Kupplungselements (24), bestimmt wird.

4. Verfahren nach einem der voranstehenden Ansprüche 1 und 3, **dadurch gekennzeichnet, dass** eine Relativstellung des Koppelelements (18) aus der Absolutstellung des Getriebezahnrads (20), insbesondere über das Übersetzungsverhältnis zwischen dem Getriebezahnrad (20) und dem Koppelelement (18), bestimmt wird.

5. Verfahren nach Anspruch 4, **dadurch gekennzeichnet, dass** der Kupplungsvorgang in Abhängigkeit der Relativstellung des Koppelelements (18) und/oder der Relativstellung des Kupplungselements (24) durchgeführt wird.

6. Verfahren nach einem der Ansprüche 3 bis 5, **dadurch gekennzeichnet, dass** die Relativstellung des Kupplungselements (24) vor einem Kupplungsvorgang mittels eines Bestromen der elektrischen Maschine (12) und/oder Erhöhen einer Drehzahl der Rotorwelle (14) eingestellt wird.

7. Verfahren nach Anspruch 6, **dadurch gekennzeichnet, dass** die Relativstellung des Kupplungselements (24) in Abhängigkeit der Relativstellung des Koppelelements (18) eingestellt wird.

8. Antriebsanordnung (10), insbesondere für ein Fahrzeug, **dadurch gekennzeichnet, dass** die Antriebsanordnung (10) eingerichtet ist, um gemäß einem Verfahren nach einem der Ansprüche 1 bis 7 betrieben zu werden.

9. Fahrzeug, insbesondere Kraftfahrzeug, mit einer Antriebsanordnung nach Anspruch 8.

## Claims

1. Method for operating a drive arrangement (10), in particular for a vehicle, comprising
- an electric machine (12) with a rotor shaft (14),
- a drive shaft (16), wherein the drive shaft (16) is coupled to the rotor shaft (14) of the electric machine (12) in such a way that the drive shaft (16) can be driven by means of the electric machine (12),
- a coupling element (18),
- a transmission gearwheel (20) which is arranged on an output shaft (19), wherein the transmission gearwheel (20) is coupled to the coupling element (18) in such a way that the transmission gearwheel (20) can be driven by means of the coupling element (18),
- a clutch device (22) with a clutch element (24), wherein the clutch element (24) is coupled rotationally conjointly to the drive shaft (16),
- wherein the drive shaft (16) can be coupled rotationally conjointly to the coupling element (18) in a coupling operation and can be decoupled therefrom in a decoupling operation,
- wherein, during the coupling operation, a toothing (26) of the clutch element (24) and a toothing (28) of the coupling element (18) are brought into engagement with one another in a form-fitting manner,
- a rotation sensor (30), wherein the rotation sensor (30) outputs a pulse signal (34) when a tooth (36) of a toothing of the transmission gearwheel (20) or a tooth of an encoder wheel coupled rotationally conjointly to the output shaft (19) is caused to pass the rotation sensor (30),
- wherein an absolute position of the transmission gearwheel (20) is determined according to a previously stored absolute position of the transmission gearwheel (20) and counting of the pulse signals output by means of the rotation sensor (30), wherein the absolute position of the transmission gearwheel (20) is determined anew from an absolute position of the rotor shaft (14) of the electric machine (12), a transmission ratio between the clutch element (24) and the rotor shaft (14) and a transmission ratio between the coupling element (18) and the transmission gearwheel (20) in a coupled state of the clutch device (22).

2. Method according to Claim 1, **characterized in that** the absolute position of the transmission gearwheel (20) or the encoder wheel is stored after at least one rotation cycle, wherein the rotation cycle corresponds to a revolution of the transmission gearwheel or the encoder wheel.

3. Method according to Claim 1, **characterized in that** a relative position of the clutch element (24) is determined from the absolute position of the rotor shaft (14) of the electric machine (12), in particular via the transmission ratio between the rotor shaft (14) and the clutch element (24).

4. Method according to one of preceding Claims 1 and 3, **characterized in that** a relative position of the coupling element (18) is determined from the absolute position of the transmission gearwheel (20), in particular via the transmission ratio between the transmission gearwheel (20) and the coupling element (18).

5. Method according to Claim 4, **characterized in that** the coupling operation is carried out according to the relative position of the coupling element (18) and/or the relative position of the clutch element (24).

6. Method according to one of Claims 3 to 5, **characterized in that** the relative position of the clutch element (24) is set before a coupling operation by means of electrical energization of the electric machine (12) and/or increasing of a rotational speed of the rotor shaft (14).

7. Method according to Claim 6, **characterized in that** the relative position of the clutch element (24) is set according to the relative position of the coupling element (18).

8. Drive arrangement (10), in particular for a vehicle, **characterized in that** the drive arrangement (10) is configured to be operated according to a method according to one of Claims 1 to 7.

9. Vehicle, in particular a motor vehicle, having a drive arrangement according to Claim 8.

## Revendications

1. Procédé pour faire fonctionner un système d'entraînement (10), en particulier pour un véhicule, comprenant
- une machine électrique (12) avec un arbre de rotor (14),
- un arbre d'entraînement (16), l'arbre d'entraînement (16) étant relié à l'arbre de rotor (14) de la machine électrique (12) de telle sorte que l'arbre d'entraînement (16) puisse être entraîné au moyen de la machine électrique (12),
- un élément d'accouplement (18),
- une roue dentée d'engrenage (20) agencée sur un arbre de sortie (19), la roue dentée d'engrenage (20) étant accouplée à l'élément d'accouplement (18) de telle sorte que la roue dentée d'engrenage (20) puisse être entraînée au moyen de l'élément d'accouplement (18),
- un système d'accouplement (22) avec un élément d'accouplement (24), l'élément d'accouplement (24) étant relié de manière solidaire en rotation à l'arbre d'entraînement (16),
- l'arbre d'entraînement (16) étant apte à être relié de manière solidaire en rotation à l'élément d'accouplement (18) lors d'un processus d'accouplement, et à être désaccouplé de celui-ci lors d'un processus de désaccouplement,
- lors du processus d'accouplement, une denture (26) de l'élément d'accouplement (24) et une denture (28) de l'élément d'accouplement (18) sont amenées en prise l'une avec l'autre par engagement positif,
- un capteur de rotation (30), le capteur de rotation (30) émettant un signal d'impulsion (34) lorsqu'une dent (36) d'une denture de la roue dentée d'engrenage (20) ou une dent d'une roue codeuse reliée de manière solidaire en rotation à l'arbre de sortie (19) passe devant le capteur de rotation (30),
- une position absolue de la roue dentée d'engrenage (20) étant déterminée en fonction d'une position absolue, préalablement enregistrée, de la roue dentée d'engrenage (20) et d'un comptage des signaux d'impulsion émis par le capteur de rotation (30), la position absolue de la roue dentée (20) étant déterminée à partir de la position absolue de l'arbre de rotor (14) de la machine électrique (12), un rapport de transmission entre l'élément d'accouplement (24) et l'arbre de rotor (14) et un rapport de transmission entre l'élément d'accouplement (18) et la roue dentée d'engrenage (20) dans un état accouplé du système d'accouplement (22).

2. Procédé selon la revendication 1, **caractérisé en ce que** la position absolue de la roue dentée d'engrenage (20) ou de la roue codeuse est enregistrée après au moins un cycle de rotation, le cycle de rotation correspondant à un tour de la roue dentée d'engrenage ou de la roue codeuse.

3. Procédé selon la revendication 1, **caractérisé en ce qu'**une position relative de l'élément d'accouplement (24) est déterminée à partir de la position absolue de l'arbre de rotor (14) de la machine électrique (12), en particulier par le biais du rapport de transmission entre l'arbre de rotor (14) et l'élément d'accouplement (24).

4. Procédé selon l'une des revendications 1 et 3 ci-dessus, **caractérisé en ce qu'**une position relative de l'élément d'accouplement (18) est déterminée à partir de la position absolue de la roue dentée d'engrenage (20), en particulier par le biais du rapport de transmission entre la roue dentée d'engrenage (20) et l'élément d'accouplement (18).

5. Procédé selon la revendication 4, **caractérisé en ce que** le processus d'accouplement est réalisé en fonction de la position relative de l'élément d'accouplement (18) et/ou de la position relative de l'élément d'accouplement (24).

6. Procédé selon l'une des revendications 3 à 5, **caractérisé en ce que** la position relative de l'élément d'accouplement (24) est réglée avant un processus d'accouplement au moyen d'une alimentation électrique de la machine électrique (12) et/ou d'une augmentation de la vitesse de rotation de l'arbre de rotor (14).

7. Procédé selon la revendication 6, **caractérisé en ce que** la position relative de l'élément d'accouplement (24) est réglée en fonction de la position relative de l'élément d'accouplement (18).

8. Système d'entraînement (10), en particulier pour un véhicule, **caractérisé en ce que** le système d'entraînement (10) est conçu pour être utilisé selon un procédé selon l'une des revendications 1 à 7.

9. Véhicule, en particulier véhicule automobile, comprenant un système d'entraînement selon la revendication 8.
